# EUROPEAN PATENT SPECIFICATION

(11) **EP 3 034 277 B1**
(45) Date of publication and mention of the grant of the patent: **28.02.2018**
(21) Application number: 14836080.3
(22) Date of filing: 11.08.2014
(51) Int. Cl.: B29C 45/14, B29C 65/02, B29C 65/48, B29C 65/52, B29C 69/00, B29C 65/82, B29C 65/16, C08J 5/12, F16B 11/00

(54) **BONDED BODY AND BONDING METHOD**
VERBUNDENER KÖRPER UND VERBINDUNGSVERFAHREN
CORPS LIÉ ET PROCÉDÉ DE LIAISON

(30) Priority: 15.08.2013 JP 2013168824
(43) Date of publication of application: 22.06.2016
(73) Proprietor: Asahi Kasei Kabushiki Kaisha, Chiyoda-ku Tokyo 101-8101 (JP)
(72) Inventor: SAITO, Taiga, Tokyo 101-8101 (JP); NAGATA, Kazuya, Tokyo 101-8101 (JP)
(74) Representative: D Young & Co LLP
(86) International application number: PCT/JP2014/071186
(87) International publication number: WO 2015/022933

(56) References cited:
- EP-A1- 2 070 685
- EP-A1- 2 468 472
- WO-A1-2009/069542
- DE-A1-102005 056 460
- DE-A1-102007 009 928
- JP-A- 2009 039 987
- JP-A- 2009 113 314
- JP-A- 2009 269 401
- JP-A- 2010 046 831
- JP-A- 2011 213 108
- JP-A- 2013 071 452
- JP-A- 2013 244 614

## Description

### Technical Field

The present invention relates to a bonded body in which a first member, and a second member formed of a material different from that of the first member are bonded to each other, and a bonding method thereof.

### Background Art

Hitherto, as a method of bonding metal to a resin, there is a bonding method described in Patent Literature 1. This bonding method is a manufacturing method of inserting a laser bonding sheet formed of a polymer between a first member formed of metal and a second member formed of a resin and melting the laser bonding sheet through laser light irradiation, thereby bonding the first member and the second member to each other. Accordingly, a bonded body in which the first member and the second member are bonded to each other with the laser bonding sheet interposed therebetween can be obtained.

### Citation List

### Patent Literature

Patent Literature 1: Japanese Patent No. 4771387
Patent Literature 2: EP 2 468 472 A1
Patent literature 3: DE 10 2007 009928 A1
Patent Literature 4 : DE 10 2005 056460 A1

### Summary of Invention

### Technical Problem

However, when the first member formed of metal and the second member formed of a resin are welded to each other by laser welding, the material of the laser bonding sheet does not infiltrate into gaps such as pores formed on the surface of the first member formed of metal, and voids remain in the gaps. Therefore, there is a possibility that sufficient bonding strength of the first member and the second member may not be obtained.

In addition, in the bonding method described in Patent Literature 1, since the laser bonding sheet has a flat sheet shape, a case in which bonding surfaces of the first member and the second member have three-dimensional shapes cannot be coped with, and the degree of freedom of shape is extremely low. Furthermore, since the laser bonding sheet is simply interposed between the first member and the second member, the laser welding sheet has low position holding properties, and has a limitation on the enhancement of quality stability. Moreover, the laser bonding sheet needs to be manufactured to match the shape of the bonding surfaces of the first member and the second member. Therefore, a large amount of waste materials are generated during the manufacturing of the laser bonding sheet, and processing costs for the laser bonding sheet are required.

Here, an object of the present invention is to provide a bonded body capable of achieving the enhancement of bonding strength, and a bonding method.

### Solution to Problem

In a bonded body according to the present invention, a first member, and a second member formed of a material different from that of the first member are bonded to each other via a bonding layer interposed therebetween, and in a range of 13 µm in a cross-section of a bonding interface between the first member and the bonding layer, the number of air bubbles having a void area of 1.5×10⁻³ µm² or greater is 100 or less, and the bonding layer has a tensile elastic modulus of 1200 MPa or higher and 2000 MPa or lower in an absolute dry state as a water absorption state at 23°C.

In the bonded body according to the present invention, since the number of air bubbles having a void area of 1.5×10⁻³ µm² or greater in a range of 13 µm in the cross-section of the bonding interface between the first member 2 and the bonding layer 4 is 100 or less, the enhancement of the bonding strength of the first member and the second member can be achieved.

The bonding layer has a tensile elastic modulus of 1200 MPa or higher and 2000 MPa or lower in the absolute dry state as the water absorption state at 23°C. When the tensile elastic modulus of the bonding layer in the absolute dry state as the water absorption state at 23°C is lower than 800 MPa, the bonding strength of the first member and the bonding layer is low. When the tensile elastic modulus of the bonding layer in the absolute dry state as the water absorption state at 23°C is higher than 2400 MPa, the linear expansion relaxation effect of the bonding layer is decreased. Therefore, by allowing the tensile elastic modulus of the bonding layer at 23°C to be 1200 MPa or higher and 2000 MPa or lower, the linear expansion relaxation effect of the bonding layer can be increased while increasing the bonding strength of the first member and the bonding layer.

In addition, the bonding layer may contain an elastomer component in an amount of 5 wt% or more and 75 wt% or less. When the amount of the elastomer component is less than 5 wt%, the linear expansion relaxation effect of the bonding layer is decreased. When the amount of the elastomer component is more than 75 wt%, the bonding strength of the first member and the bonding layer is decreased. Therefore, by allowing the amount of the elastomer component of the bonding layer to be 5 wt% or more and 75 wt% or less, the linear expansion relaxation effect of the bonding layer can be increased while increasing the bonding strength of the first member and the bonding layer.

In addition, the elastomer may have a tensile elastic modulus of 50 MPa or higher and 1000 MPa or lower in the absolute dry state as the water absorption state at 23°C. Accordingly, the linear expansion relaxation effect of the bonding layer can be further increased while further increasing the bonding strength of the first member and the bonding layer. In this case, examples of the elastomer may include a styrene-based elastomer, an olefin-based elastomer, an engineering plastic-based elastomer, and a polyester-based elastomer.

A bonding method according to the present invention is a bonding method of bonding a first member to a second member which is formed of a material different from that of the first member, the method including: an injection molding process of integrally laminating a bonding layer for bonding the first member and the second member to each other, on a bonding surface of the first member, which is to be bonded to the second member, through injection molding; and a bonding process of bonding the second member to the bonding layer after the injection molding process, wherein the bonding layer has a tensile elastic modulus of 1200 MPa or higher and 2000 MPa or lower in an absolute dry state as a water absorption state at 23°C.

According to the bonding method according to the present invention, since the bonding layer is integrally laminated on the bonding surface of the first member through the injection molding of the bonding layer, compared to a case where the first member and the bonding layer are bonded to each other by laser welding, the bonding layer more easily infiltrates into gaps such as pores formed in the surface of the first member, and the gaps are less likely to remain. As a result, the number of air bubbles generated in the bonding interface between the first member and the bonding layer can be reduced. Therefore, in the bonded body in which the first member and the second member are bonded to each other via the bonding layer interposed therebetween, the enhancement of the bonding strength of the first member and the second member can be achieved. Furthermore, since the bonding layer is integrally laminated on the first member through injection molding in the injection molding process, even when the bonding surfaces of the first member and the second member have three-dimensional shapes, the bonding layer can be formed on the bonding surface of the first member, which is to be bonded to the second member. Accordingly, the first member and the second member can be appropriately bonded to each other in the bonding process. In addition, the injection-molded bonding layer does not deviate from the first member unlike the laser bonding sheet of Patent Literature 1 and thus achieves bonding quality stability. Moreover, the bonding layer can be formed only in a necessary portion. Therefore, waste materials from the laser bonding sheet or processing costs are not generated unlike in Patent Literature 1, and thus a reduction in costs can be achieved.

In this case, in the bonding process, the second member may be bonded to the bonding layer through welding. Accordingly, the first member and the second member can be appropriately bonded to each other. Examples of the welding may include laser welding, hot plate welding, vibration welding, and ultrasonic welding, and among these, laser welding is preferable.

In addition, the injection molding process may further include a surface treatment process of forming pores on the bonding surface of the first member. Accordingly, the bonding strength of the bonding layer to the first member is enhanced. Particularly, in the injection molding process, since the bonding layer infiltrates into the pores formed in the bonding surface in a state of being melted through injection molding, the bonding strength of the bonding layer to the first member is further enhanced.

In addition, the first member may be formed of any one of metal and glass, and the second member may be formed of a resin. Accordingly, the resin can be appropriately bonded to the metal or the glass. Moreover, although the bonding layer is less likely to be bonded to the metal or the glass than the resin, the bonding layer can be firmly bonded to the metal or the glass by injection-molding the bonding layer onto the metal or the glass.

### Advantageous Effects of Invention

According to the present invention, the enhancement of bonding strength can be achieved.

### Brief Description of Drawings

FIG. 1 is a flowchart illustrating a bonding method according to an embodiment.
FIG. 2 is a perspective view illustrating the relationship among a first member, a second member, and a bonding layer.
FIG. 3 is a sectional view illustrating an insert-molded state in an injection molding process.
FIG. 4 is a perspective view illustrating a shape example of a bonding surface.
FIG 5 is a schematic view illustrating a bonded body according to the embodiment.
FIG. 6 is a sectional view illustrating a bonded body of Examples 1 to 11 and Comparative Examples 1 and 2.
FIG. 7 is a view showing laser welding conditions.
FIG. 8 is a view showing test results of Examples 1 to 11 and Comparative Examples 1 and 2.
FIG. 9 is a sectional view illustrating a bonded body of Examples 12 to 14.
FIG. 10 is a view showing test results of Examples 12 to 14.
FIG. 11 is a schematic view illustrating a method of counting the number of air bubbles.
FIG. 12 is an enlarged view of a portion of FIG. 11.
FIG. 13 is a schematic view illustrating a method of conducting a heat shock test.
FIG 14 is a view showing test results of Reference Example 1 and Comparative Example 3.

### Description of Embodiments

Hereinafter, a preferred exemplary embodiment of a bonded body and a bonding method according to the present invention will be described in detail with reference to the drawings. The bonded body according to the embodiment is a bonded body in which a first member, and a second member formed of a material different from that of the first member are bonded to each other via a bonding layer interposed therebetween. The bonding method according to the embodiment is a method which manufactures the bonded body according to the embodiment and in which a first member, and a second member formed of a material different from that of the first member are bonded by a bonding layer. In addition, in all of the figures, like elements that are the same or similar are denoted by like reference numerals.

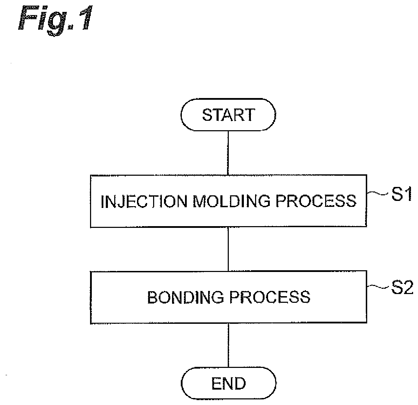

FIG. 1 is a flowchart illustrating the bonding method according to the embodiment. As illustrated in FIG. 1, in the bonding method according to the embodiment, first, an injection molding process (Step 1) of integrally laminating a bonding layer for bonding the first member and the second member to each other, on a bonding surface of the first member, which is to be bonded to the second member, through injection molding is performed. An injection molding method performed in the injection molding process (Step 1) is not particularly limited, and for example, in a case where the first member is formed of metal, glass, or ceramic, insert molding may be employed. In a case where the first member is formed of a resin, two-color molding may be employed. The injection molding method is not limited thereto, and various injection molding methods may be employed. Typically, the bonding surface of the first member, which is to be bonded to the second member, is not a completely flat surface, and has fine gaps formed therein. In a case where the first member is formed of metal, glass, or ceramic, it is preferable that pores be formed on the bonding surface of the first member which is to be bonded to the second member. The pores are formed to form the gaps in the bonding surface of the first member, which is to be bonded to the second member, and to further increase bonding strength of the first member (bonding surface) and the bonding layer. The formation of the pores may be performed through any treatment, and for example, may be performed through an alumite treatment or laser irradiation. In addition, a body formed by injection-molding the bonding layer onto the bonding surface in the injection molding process (Step S1) is referred to as a bonding layer formed body.

Next, a bonding process (Step S2) of bonding the second member to the bonding layer is performed. In addition, a body in which the second member is bonded to the bonding layer in the bonding process (Step S2) is referred to as a bonded body. The bonding method performed in the bonding process (Step S2) is not particularly limited, and for example, welding may be employed. Examples of the welding may include laser welding, hot plate welding, vibration welding, and ultrasonic welding, and among these, laser welding is preferable. In this case, for example, in a case where the second member is formed of metal, glass, or ceramic, the bonding layer can be formed on the second member by melting the bonding layer. In a case where the second member is formed of a resin, the second member may be bonded to the bonding layer by melting any of the bonding layer and the second member, or the second member may be bonded to the bonding layer by melting both of the bonding layer and the second member. Here, the bonding method is not limited to welding, and various bonding methods may be employed. In addition, in a case where the second member is formed of metal, glass, or ceramic, it is preferable that pores be formed on a bonding surface of the second member, which is to be bonded to the bonding layer. The pores are formed to increase the bonding strength of the second member (bonding surface) and the bonding layer. The formation of the pores may be performed through any treatment, and for example, may be performed through an alumite treatment or laser irradiation. A body in which the first member and the second member are bonded to each other via the bonding layer interposed therebetween in the bonding process (Step S2) is referred to as a bonded body.

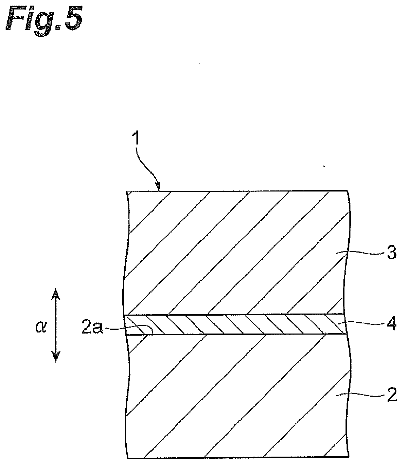

FIG. 5 is a schematic view illustrating the bonded body according to the embodiment. As illustrated in FIG. 5, a bonded body 1 according to the embodiment is a bonded body in which a first member 2, and a second member 3 formed of a material different from that of the first member 2 are bonded to each other via a bonding layer 4 interposed therebetween. Specifically, in the bonded body 1, the bonding layer 4 is integrally laminated on a bonding surface 2a of the first member 2, which is to be bonded to the second member 3, through injection molding, and the second member 3 is bonded to the bonding layer 4. The bonding layer 4 and the second member 3 are bonded to each other by welding.

In addition, in a range of 13 µm in the cross-section of the bonding interface between the first member 2 and the bonding layer 4, the number of air bubbles having a void area of 1.5×10⁻³ µm² or greater is 100 or less. In this case, the number of air bubbles is preferably 80 or less, more preferably 60 or less, and even more preferably 40 or less.

Here, a method of calculating the number of air bubbles will be described. First, broad ion beam processing is performed on the bonded body 1 in each layer direction using IM4000 manufactured by Hitachi High-Technologies Corporation, thereby producing a cross-sectional sample in a bonding direction α of the first member 2 and the second member 3. In addition, the cross-sectional sample is observed by a scanning electron microscope (SEM). For example, observation conditions include S-4700 manufactured by Hitachi High-Technologies Corporation with an accelerating voltage of 2.0 kV and a photographic magnification of 10.0 k. Next, from an SEM image (picture), a range of 13 µm in the cross-section of the bonding interface between the first member 2 and the bonding layer 4 is extracted. Next, the number of air bubbles having a void area of 1.5×10⁻³ µm² or greater in the extracted range is counted. In addition, the size of a void that can be recognized in the case of being magnified under conditions of an accelerating voltage of 2.0 kV and a photographic magnification of 10.0 k using the SEM is 1.5×10⁻³ µm² or greater. In the bonded body 1 according to the embodiment, the number of air bubbles that are bounded is 100 or less. The bonded body 1 according to the embodiment can be manufactured, for example, by the above-described bonding method.

The material of the first member 2 is not particularly limited, and various materials such as metal, glass, ceramic, and resins may be used. For example, in a case where the bonding layer 4 and the second member 3 are laser-welded to each other by emitting laser light from the first member 2 side in the bonding process (Step S2), a material having a property of transmitting the laser light is preferably used for the first member 2.

The material of the second member 3 is not particularly limited as long as the material is different from that of the first member 2, and various materials such as metal, glass, ceramic, and resins may be used. For example, in a case where the bonding layer 4 and the second member 3 are laser-welded to each other by emitting laser light from the second member 3 side in the bonding process (Step S2), a material having a property of transmitting the laser light is preferably used for the second member 3.

The material (also referred to as "bonding layer material") of the bonding layer 4 is not particularly limited as long as the material can bond the first member and the second member to each other, and various bonding materials may be used. For example, in a case where the bonding layer 4 and the second member 3 are laser-welded to each other in the bonding process (Step S2), a material that is melted by laser irradiation is preferably used for the bonding layer 4.

For example, the bonding layer 4 may contain an elastomer component in an amount of 5 wt% or more and 75 wt% or less. In this case, the elastomer component is preferably in an amount of 10 wt% or more and 70 wt% or less, more preferably in an amount of 15 wt% or more and 65 wt% or less, and even more preferably in an amount of 20 wt% or more and 60 wt% or less. When the amount of the elastomer component is more than 75 wt% (when the rubber content is too high), the fluidity is decreased, and the elastomer component is less likely to infiltrate into the pores (gaps) of the first member 2, resulting in a decrease in the bonding strength of the first member and the bonding layer. Therefore, by allowing the amount of the elastomer component of the bonding layer to be 75 wt% or less, the fluidity is increased, and the elastomer component easily infiltrates into the pores (gaps) of the first member 2. Accordingly, the bonding strength of the first member and the bonding layer can be increased. On the other hand, when the amount of the elastomer component is less than 5 wt% (when the rubber content is too low), the linear expansion relaxation effect of the bonding layer is decreased. Therefore, by allowing the amount of the elastomer component of the bonding layer to be 5 wt% or more, the linear expansion relaxation effect of the bonding layer can be increased.

The elastomer contained in the bonding layer 4 may be, for example, an elastomer having a tensile elastic modulus of 50 MPa or higher and 1000 MPa or lower in an absolute dry state as a water absorption state at 23°C. Here, the absolute dry state as the water absorption state means a state in which the moisture content is 0.1% or less. Accordingly, the linear expansion relaxation effect of the bonding layer can be further increased while further increasing the bonding strength of the first member and the bonding layer. In this case, examples of the elastomer contained in the bonding layer 4 include a styrene-based elastomer, an olefin-based elastomer, an engineering plastic-based elastomer, and a polyester-based elastomer.

In addition, from the viewpoint of maintaining high bonding strength, the tensile elastic modulus of the bonding layer 4 in the absolute dry state as the water absorption state at 23°C may be 800 MPa or higher and 2400 MPa or lower. In the present invention,
the tensile elastic modulus of the bonding layer 4 in the absolute dry state as the water absorption state at 23°C is 1200 MPa or higher and 2000 MPa or lower, and preferably 1600 MPa or higher and 1900 MPa or lower. When the tensile elastic modulus of the bonding layer 4 in the absolute dry state as the water absorption state at 23°C is lower than 800 MPa, the bonding strength of the first member and the bonding layer is low. When the tensile elastic modulus of the bonding layer in the absolute dry state as the water absorption state at 23°C is higher than 2400 MPa, the linear expansion relaxation effect of the bonding layer is decreased.

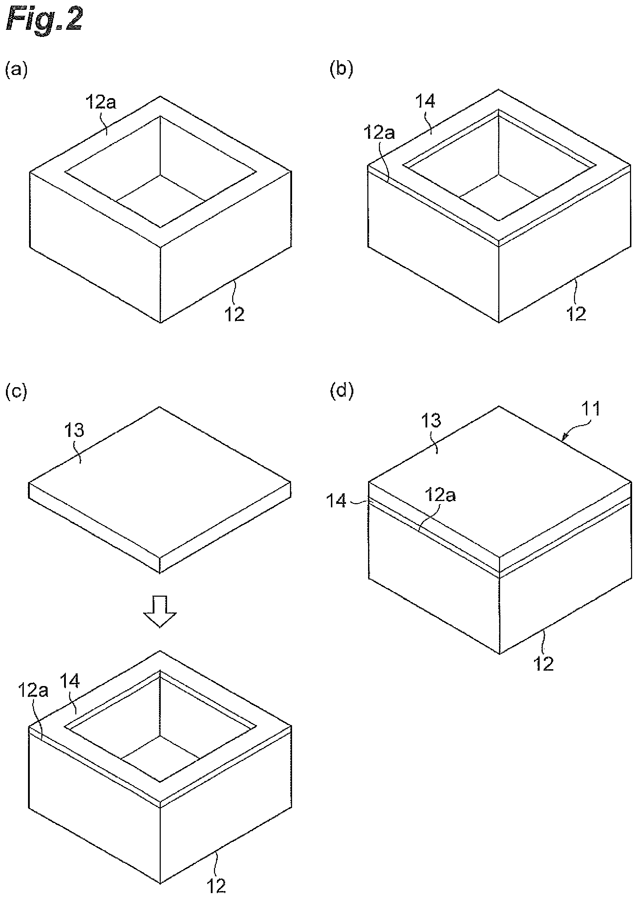

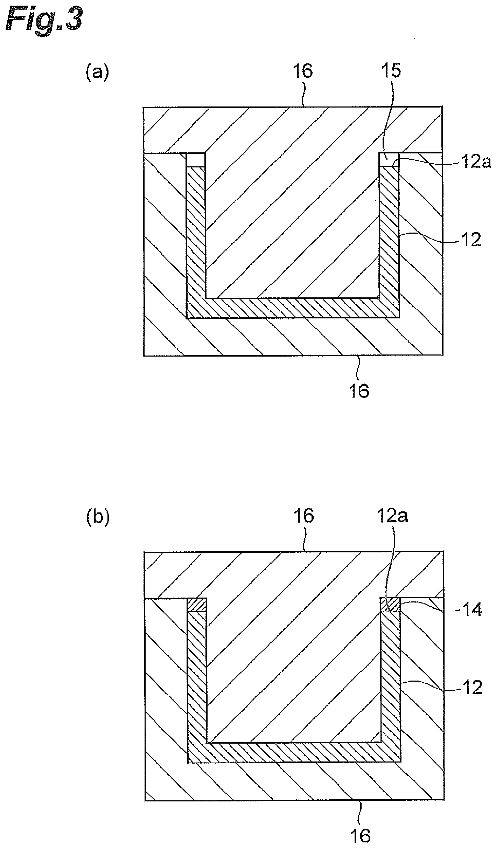

Next, as a specific example of the bonded body and the bonding method according to the embodiment, the case of manufacturing a bonded body 11 in which a square metal container 12 and a resin cover 13 are bonded to each other via a bonding layer 14 interposed therebetween will be described with reference to FIGS. 2 and 3.

FIG. 2 is a perspective view illustrating the relationship among the first member, the second member, and the bonding layer. FIG. 3 is a sectional view illustrating an insert-molded state in the injection molding process.

First, the square metal container 12 which is open upward is prepared (see FIG. 2(a)), and a large number of pores are formed on an upper end surface 12a of the metal container 12 through an alumite treatment, laser irradiation, or the like.

Next, as illustrated in FIG. 3, a mold 16 which accommodates the metal container 12 and has a bonding layer formation space 15 for forming the bonding layer 14 on the upper end surface 12a of the metal container 12 is prepared. In addition, the metal container 12 is set in the mold 16 (see FIG 3 (a)), and the bonding layer material for forming the bonding layer is heated, melted, and poured into the bonding layer formation space 15 (see FIG. 3(b)). In addition, by allowing the bonding layer material to be cooled and solidified, the bonding layer 14 is laminated on the upper end surface 12a of the metal container 12. At this time, the melted bonding layer material infiltrates into the large number of pores formed in the upper end surface 12a of the metal container 12. Therefore, as the bonding layer material is cooled and solidified, the bonding strength of the bonding layer 14 to the upper end surface 12a is further increased by the anchoring effect. Accordingly, a bonding layer formed body in which the bonding layer 14 is injection-molded onto the upper end surface 12a can be formed (see FIG. 2(b)).

Next, the resin cover 13 to be bonded to the metal container 12 is prepared (see FIG. 2(c)), and the resin cover 13 is welded to the bonding layer 14 of the bonding layer formed body by laser welding. Accordingly, the bonded body 11 in which the metal container 12 and the resin cover 13 are firmly bonded to each other via the bonding layer 14 interposed therebetween can be formed (see FIG. 2(d).

As described above, according to the bonded body 1 according to the embodiment, since the number of air bubbles having a void area of 1.5×10⁻³ µm² or greater in a range of 13 µm in the cross-section of the bonding interface between the first member 2 and the bonding layer 4 in the cross-section of the bonding layer 4 in the bonding direction α of the first member 2 and the second member 3 is 100 or less, the enhancement of the bonding strength of the first member 2 and the second member 3 can be achieved.

In addition, by allowing the tensile elastic modulus of the bonding layer 4 in the absolute dry state as the water absorption state at 23°C to be 800 MPa or higher and 2400 MPa or lower, the linear expansion relaxation effect of the bonding layer can be increased while increasing the bonding strength of the first member and the bonding layer.

In addition, by allowing the amount of the elastomer component in the bonding layer to be 5 wt% or more and 75 wt% or less, the linear expansion relaxation effect of the bonding layer can be increased while increasing the bonding strength of the first member and the bonding layer.

In addition, by allowing the tensile elastic modulus of the elastomer in the absolute dry state as the water absorption state at 23°C to be 50 MPa or higher and 1000 MPa or lower, the linear expansion relaxation effect of the bonding layer 4 can be further increased while further increasing the bonding strength of the first member 2 and the bonding layer 4.

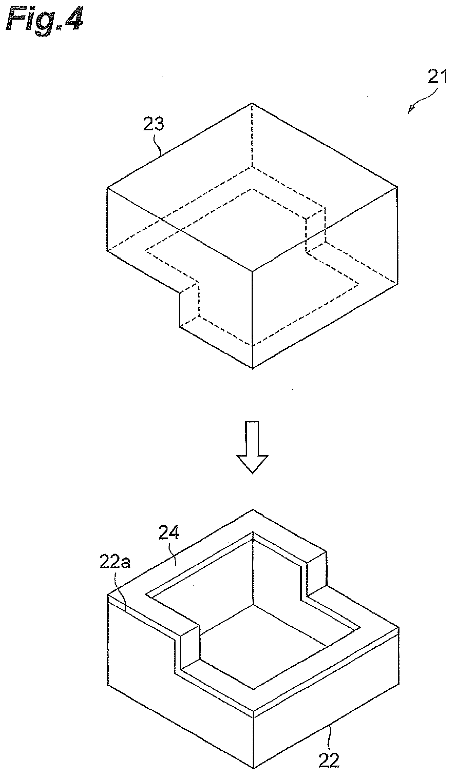

According to the bonding method according to the embodiment, since the bonding layer is integrally laminated on the bonding surface of the first member through the injection molding of the bonding layer, compared to a case where the first member and the bonding layer are bonded to each other by laser welding, the bonding layer more easily infiltrates into the gaps such as the pores formed in the surface of the first member, and the gaps are less likely to remain. As a result, the number of air bubbles generated in the bonding interface between the first member and the bonding layer can be reduced. Therefore, in the bonded body in which the first member and the second member are bonded to each other via the bonding layer interposed therebetween, the enhancement of the bonding strength of the first member and the second member can be achieved. Furthermore, since the bonding layer is injection-molded onto the first member in the injection molding process (Step S1), even when the bonding surfaces of the first member and the second member have three-dimensional shapes, the bonding layer can be formed on the bonding surface of the first member, which is to be bonded to the second member. Accordingly, the first member and the second member can be appropriately bonded to each other in the bonding process (Step S2). For example, as in a bonded body 21 illustrated in FIG. 4, even when bonding surfaces of a first member 22 and the second member 23 are formed in a three-dimensional stepped shape, a bonding layer 24 can be easily formed on a bonding surface 22a of the first member 22, and thus the first member 22 and the second member 23 can be appropriately bonded to each other.

In addition, the injection-molded bonding layer does not deviate from the first member unlike the laser bonding sheet of Patent Literature 1 and thus achieves bonding quality stability. Moreover, the bonding layer can be formed only in a necessary portion. Therefore, waste materials from the laser bonding sheet or processing costs are not generated unlike in Patent Literature 1, and thus a reduction in costs can be achieved.

In addition, in a case where the first member is formed of metal, glass, or ceramic, by forming the pores in the first member, the bonding strength of the bonding layer to the first member is enhanced. In the injection molding process (Step S1), since the bonding layer infiltrates into the pores formed in the bonding surface in a state of being melted through injection molding, the bonding strength of the bonding layer to the first member is further enhanced. Similarly, in a case where the second member is formed of metal, glass, or ceramic, by forming the pores in the second member, the bonding strength of the bonding layer to the second member is enhanced. In the case of melting the bonding layer in the bonding process (Step S2), since the bonding layer infiltrates into the pores formed in the bonding surface in a state of being melted, the bonding strength of the bonding layer to the second member is further enhanced.

In addition, the bonding layer is less likely to be bonded to metal than a resin. However, by injection-molding the bonding layer onto the first member made of metal, the bonding layer can be firmly bonded to the first member made of metal.

While the exemplary embodiment of the present invention has been described above, the present invention is not limited to the embodiment.

For example, in the detailed description of the embodiment, the first member is formed of metal and the second member is formed of a resin. However, the first member and the second member are not limited to these materials, and may employ various materials. For example, the first member may be formed of glass. Otherwise, the first member may be formed of a resin while the second member is formed of metal. In the case of forming the first member of the resin, the bonding layer may be formed on the first member through two-color molding or the like.

In addition, in the description of the embodiment, the surface treatment process is performed before the injection molding process. However, when the connection strength of the bonding layer to the bonding surface of the first member causes no problem, such a surface treatment process is not necessarily needed.

### [Examples]

Next, Examples of the present invention will be described. The present invention is not limited to the following Examples.

### (Examples 1 to 11)

As a first member, a metal flat plate was used. As the material of the first member, aluminum (AL5052) and aluminum (ADC12) were used.

As the material of a bonding layer, the following materials were used. A polyamide resin composite material (hereinafter, referred to as "bonding material A") obtained by melting and kneading 80 mass% of PA 66 (trade name: Leona 1200, manufactured by Asahi Kasei Chemicals Corporation) and 20 mass% of an elastomer (trade name: Tuftec M1918, manufactured by Asahi Kasei Chemicals Corporation) using a twin screw extruder (trade name: TEM35, manufactured by Toshiba Machine Co., Ltd.) set to a barrel temperature of 290°C, diluting the obtained thermoplastic material 100 times with a Leona resin (trade name: 2300LA33295, manufactured by Asahi Kasei Chemicals Corporation), and mixing the resultant, and a polyamide resin composite material (hereinafter, referred to as "bonding material B") obtained by melting and kneading 80 mass% of PA 66 (trade name: Leona 1200, manufactured by Asahi Kasei Chemicals Corporation) and 20 mass% of an elastomer (trade name: Tuftec M1918, manufactured by Asahi Kasei Chemicals Corporation) using a twin screw extruder (trade name: TEM35, manufactured by Toshiba Machine Co., Ltd.) set to a barrel temperature of 290°C, were used.

As a second member, a cup-shaped container formed of a resin was used. As the material of the second member, the following materials were used. 3 mass% of potassium iodide and 0.1 mass% of copper iodide were added to an aqueous solution of a 40% AH salt (an equimolar salt of adipic acid, hexamethylenediamine, or the like) in a 400L autoclave, and the resultant was heated and melted under an increased pressure of 1.8 MPa so as to be polymerized. 67 parts by mass of polyamide 66 obtained by allowing the obtained polymer to be subjected to cooling, solidification, and granulation, and 33 parts by mass of glass fiber (trade name: T275H, manufactured by Asahi Kasei Chemicals Corporation) were melted and kneaded using a twin screw extruder (trade name: TEM35, manufactured by Toshiba Machine Co., Ltd.) set to a barrel temperature of 290°C, thereby obtaining a thermoplastic material (hereinafter, referred to as "resin material A"). 3 mass% of potassium iodide and 0.1 mass% of copper iodide were added to an aqueous solution of a 40% AH salt (an equimolar salt of adipic acid, hexamethylenediamine, or the like) in a 400L autoclave, and the resultant was heated and melted under an increased pressure of 1.8 MPa so as to be polymerized. 64.5 parts by mass of polyamide 66 obtained by allowing the obtained polymer to be subjected to cooling, solidification, and granulation, 33 parts by mass of glass fiber (trade name: T275H, manufactured by Asahi Kasei Chemicals Corporation), and 2.5 parts by mass of a color masterbatch for laser welding (trade name: eBIND ACW-9871, manufactured by Orient Chemical Industries Co., Ltd.) were melted and kneaded using a twin screw extruder (trade name: TEM35, manufactured by Toshiba Machine Co., Ltd.) set to a barrel temperature of 290°C, thereby obtaining a thermoplastic material (hereinafter, referred to as "resin material B"). The resin material A and the resin material B obtained as described above were used as the material of the second member.

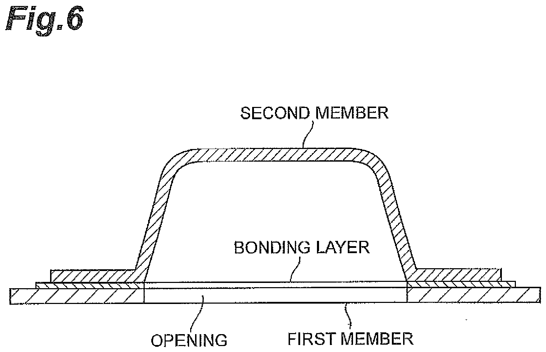

In addition, pores were formed on a bonding surface of the first member, which was to be bonded to the second member, through an alumite treatment, the bonding layer was integrally laminated on the bonding surface of the first member through injection molding, and the second member and the bonding layer were laser-welded to each other, thereby producing a bonded body illustrated in FIG. 6. An opening through which water was injected into the bonded body was formed in the first member.

The alumite treatment is a treatment of forming an oxide film on the surface of metal at an appropriate current density and allowing the obtained film coated with the oxide to form pores.

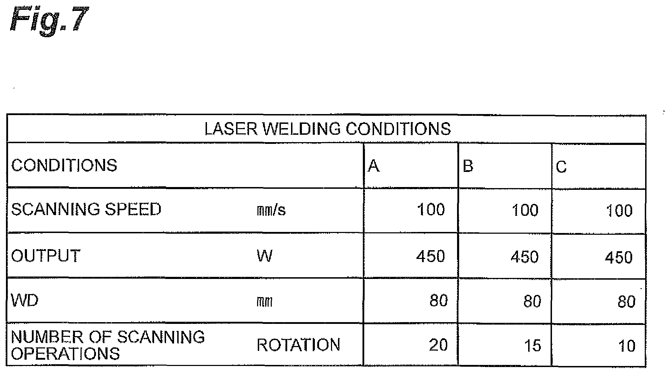

The laser welding conditions were as shown in A to C fields of FIG. 7. In FIG. 7, WD represents the distance from an optical system to the bonding surface of the first member.

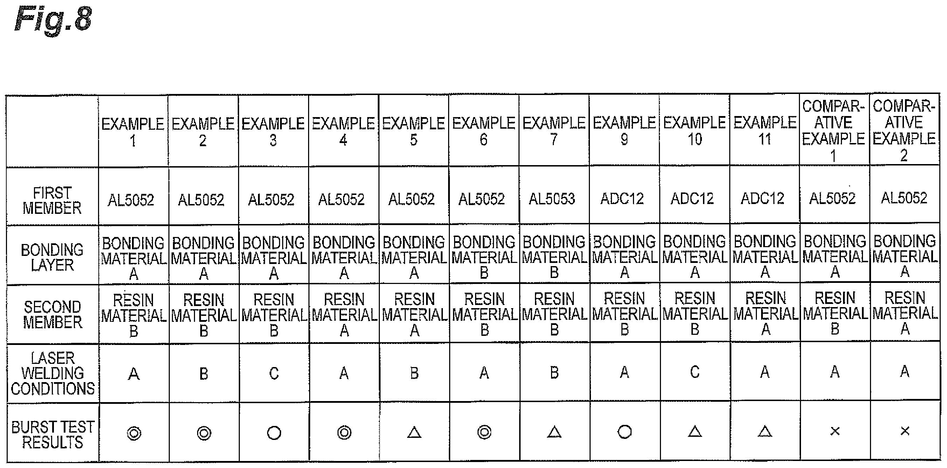

A destructive test was conducted on the bonded body. In destructive inspection, the bonded body was attached to the destructive test tool, water was injected through the inflow port of the destructive test tool, and a pressure at which breaking of the bonded body occurred or water leakage occurred was measured as a burst strength. As a result of the test, a burst pressure of 1 MPa or higher was evaluated as ⊙, a burst pressure of 0.1 MPa or higher and lower than 1 MPa was evaluated as ○, 0 MPa, which was measured because there were unwelded portions and leakage occurred although the portions were bonded in an external view, was evaluated as Δ, and non-welding was evaluated as ×. The test results are shown in FIG. 8.

### (Comparative Examples 1 and 2)

As a first member, a metal flat plate was used. As the material of the first member, aluminum (AL5052) and aluminum (ADC12) were used.

As a bonding layer, a cup-shaped container formed of a resin was used. As the material of the bonding layer, the bonding material A and the bonding material B were used.

A second member was formed of a resin. As the material of the second member, the resin material A and the resin material B were used.

In addition, pores were formed on a bonding surface of the first member, which was to be bonded to the second member, through an alumite treatment, the bonding layer was placed on the bonding surface of the first member, and the first member, the second member, and the bonding layer were laser-welded to each other, thereby producing a bonded body illustrated in FIG. 6. An opening through which water was injected into the bonded body was formed in the first member.

The laser welding conditions were as shown in A to C fields of FIG. 7.

A destructive test was conducted on the bonded body. In destructive inspection, the bonded body was attached to a destructive test tool, water was injected through an inflow port of the destructive test tool, and a pressure at which breaking of the bonded body occurred or water leakage occurred was measured as a burst strength. As a result of the test, a burst pressure of 1 MPa or higher was evaluated as ⊙, a burst pressure of 0.1 MPa or higher and lower than 1 MPa was evaluated as ○, 0 MPa, which was measured because there were unwelded portions and leakage occurred although the portions were bonded in an external view, was evaluated as Δ, and non-welding was evaluated as ×. The test results are shown in FIG. 8.

As shown in FIG. 8, in both of Comparative Examples 1 and 2, the first member and the second member were peeled and separated from each other before a burst test. However, in Examples 1 to 11, the first member and the second member were not peeled or separated from each other at an internal pressure of the burst test, and were not peeled or separated from each other as long as they were not forcibly pulled to be separated from each other.

### (Examples 12 to 14)

As a first member, a cup-shaped container formed of a resin was used. As the material of the first member, the resin material A was used.

A bonding layer was formed of a resin. As the material of the bonding layer, the bonding material A was used.

As a second member, a metal flat plate was used. As the material of the second member, aluminum (AL5052) was used.

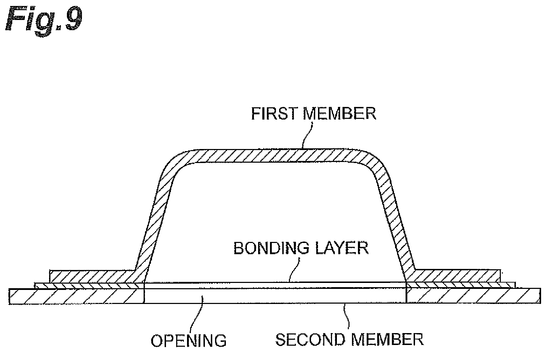

In addition, the first member and the bonding layer were integrally laminated by two-color molding, pores were formed on a bonding surface of the second member, which was to be bonded to the first member, through an alumite treatment, and the second member and the bonding layer were laser-welded to each other, thereby producing a bonded body illustrated in FIG. 9. An opening through which water was injected into the bonded body was formed in the second member.

The alumite treatment is a treatment of forming an oxide film on the surface of metal at an appropriate current density and allowing the obtained film coated with the oxide to form pores.

The laser welding conditions were as shown in A to C fields of FIG. 7.

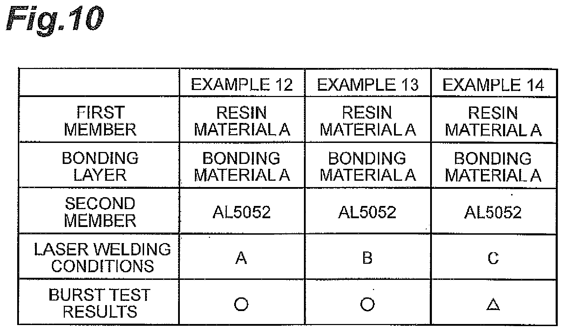

A destructive test was conducted on the bonded body. In destructive inspection, the bonded body was attached to the destructive test tool, water was injected through the inflow port of the destructive test tool, and a pressure at which breaking of the bonded body occurred or water leakage occurred was measured as a burst strength. As a result of the test, a burst pressure of 1 MPa or higher was evaluated as ⊙, a burst pressure of 0.1 MPa or higher and lower than 1 MPa was evaluated as ○, 0 MPa, which was measured because there were unwelded portions and leakage occurred although the portions were bonded in an external view, was evaluated as Δ, and non-welding was evaluated as ×. The test results are shown in FIG. 10.

As illustrated in FIG. 10, in all of Examples 12 to 14, the first member and the second member were not peeled or separated from each other at an internal pressure of the burst test, and were not peeled or separated from each other as long as they were not forcibly pulled to be separated from each other.

### (Evaluation of Number of Air Bubbles)

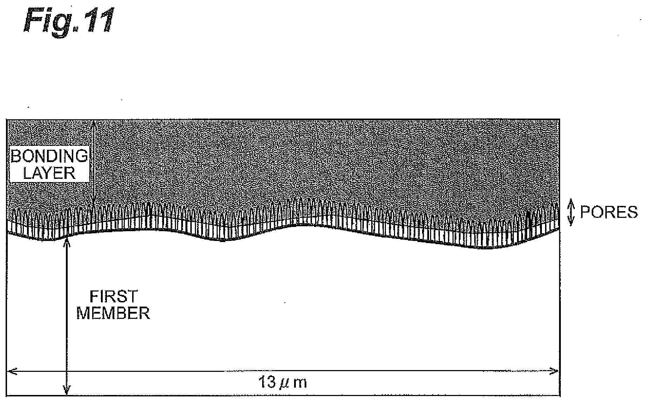

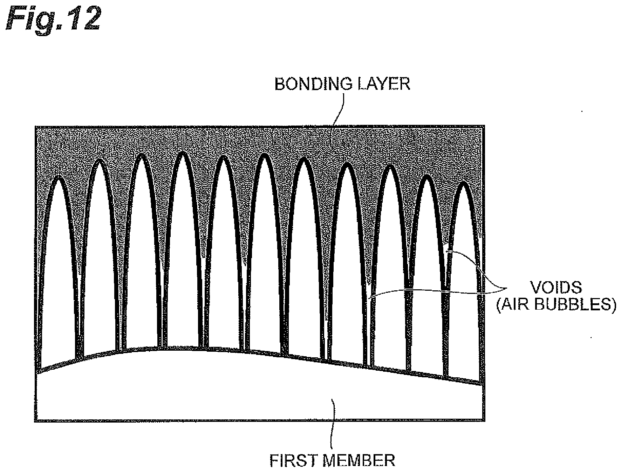

The bonded body of Example 1 and the bonded body of Comparative Example 1 were prepared. Each of the bonded bodies was cut in the bonding direction of the first member and the second member, and the cut surface was observed through SEM. FIG. 11 is a schematic view illustrating a method of counting the number of air bubbles. FIG. 12 is an enlarged view of a portion of FIG. 11. As illustrated in FIGS. 11 and 12, from an SEM image (picture), a range of 13 µm in the cross-section of the bonding interface between the first member 2 and the bonding layer 4 was extracted, and the number of air bubbles having a void area of 1.5×10⁻³ µm² or greater in the extracted range was counted.

As a result, the number of air bubbles in the bonded body of Comparative Example 1 was 134, while the number of air bubbles in the bonded body of Example 1 was 31. As described above, it was presumed that since the number of air bubbles in the bonding layer in the bonded body of Example 1 was significantly reduced compared to that in the bonded body of Comparative Example 1, the bonding strength of the first member and the second member was high.

### (Reference Example 1)

In Reference Example 1, as a bonded body, a body in which a bonding member was integrally laminated onto a first member through injection molding was used. That is, in the bonded body of Reference Example 1, a second member was not provided, and the bonding member was used as a bonding layer.

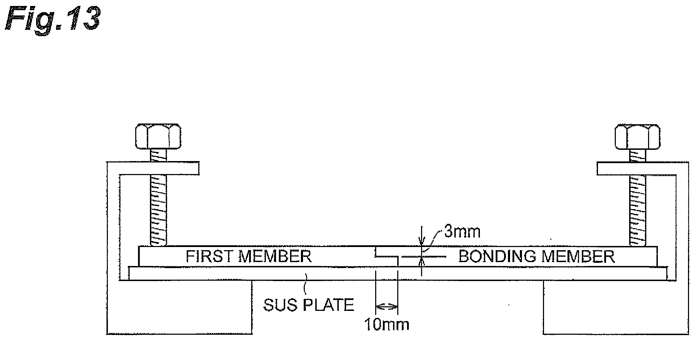

As illustrated in FIG. 13, as the first member, a long, thin, and flat plate formed of metal was used, and an end surface thereof, which was to be bonded to the bonding layer, was formed in a stepped shape having two steps. The stepped end surface had a step width of 10 mm and a step height of 3 mm. As the material of the first member, aluminum (AL5052) was used. As the material of the bonding layer, the bonding material B having an elastic modulus of 1900 MPa was used. In addition, the bonding layer was integrally laminated onto the stepped end surface of the first member through injection molding, thereby obtaining a bonded body having a long, thin, and flat plate shape as the overall shape.

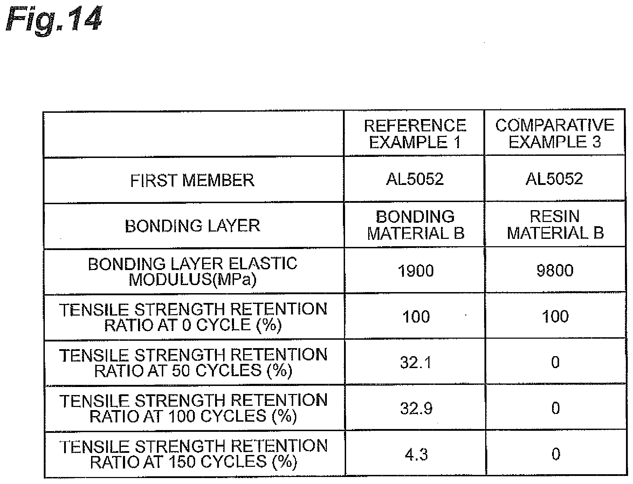

Thereafter, a heat shock test was conducted. In the heat shock test, first, the bonded body of Reference Example 1 was fixed to metal (SUS) having low linear expansion in order to forcibly hold the linear expansion of the first member and the connection member. Next, assuming -35±5°C × 2 hours and 130±5°C × 2 hours as 1 cycle, 50 cycles, 100 cycles, and 150 cycles were conducted, and the tensile strength retention ratio at this time was measured. The tensile strength retention ratio was expressed as a percentage when the tensile strength retention ratio at 0 cycle (a state before the experiment) is set to 100%. The test results are shown in FIG. 14.

### (Comparative Example 3)

In Comparative Example 3, as a bonded body, a body in which a bonding member was integrally laminated onto a first member through injection molding was used. That is, in the bonded body of Comparative Example 3, a second member was not provided, and the bonding member was used as a bonding layer.

As illustrated in FIG. 13, as the first member, a long, thin, and flat plate formed of metal was used, and an end surface thereof, which was to be bonded to the bonding layer, was formed in a stepped shape having two steps. The stepped end surface had a step width of 10 mm and a step height of 3 mm. As the material of the first member, aluminum (AL5052) was used. As the material of the bonding layer, the resin material B having an elastic modulus of 9800 MPa was used. In addition, the bonding layer was integrally laminated onto the stepped end surface of the first member through injection molding, thereby obtaining a bonded body having a long, thin, and flat plate shape as the overall shape.

Thereafter, a heat shock test was conducted. In the heat shock test, first, the bonded body of Comparative Example 3 was fixed to metal (SUS) having low linear expansion in order to forcibly hold the linear expansion of the first member and the connection member. Next, assuming -35±5°C × 2 hours and 130±5°C × 2 hours as 1 cycle, 50 cycles, 100 cycles, and 150 cycles were conducted, and the tensile strength retention ratio at this time was measured. The tensile strength retention ratio was expressed as a percentage when the tensile strength retention ratio at 0 cycle (a state before the experiment) is set to 100%. The test results are shown in FIG. 14.

As illustrated in FIG. 14, in Comparative Example 3, after 50 cycles had passed, the tensile strength retention ratio was already 0%, that is, the first member and the connection member were in a broken state. However, in Reference Example 1, even when 150 cycles had passed, the tensile strength retention ratio was 4.3, that is, the first member and the connection member were in a state of not being broken. From the results, in the present invention, it was found that by using the bonding member having a low elastic modulus as the bonding layer, the tensile strength retention ratio between the first member and the bonding layer could be maintained even under harsh temperature cycle conditions.

### Reference Signs List

- 1: bonded body
- 2: first member
- 2a: bonding surface
- 3: second member
- 4: bonding layer
- 11: bonded body
- 12: metal container (first member)
- 12a: upper end surface
- 13: resin cover (second member)
- 14: bonding layer
- 15: bonding layer formation space
- 16: mold
- 21: bonded body
- 22: first member
- 22a: bonding surface
- 23: second member
- 24: bonding layer
- α: bonding direction

## Claims

1. A bonded body (1, 11, 21), wherein
a first member (2, 12, 22), and a second member (3, 13, 23) formed of a material different from that of the first member are bonded to each other via a bonding layer (4, 14, 24) interposed therebetween, and
in a range of 13 µm in a cross-section of a bonding interface between the first member and the bonding layer, the number of air bubbles having a void area of 1.5×10⁻³ µm² or greater is 100 or less,
**characterised in that** the bonding layer has a tensile elastic modulus of 1200 MPa or higher and 2000 MPa or lower in an absolute dry state as a water absorption state at 23°C.

2. The bonded body according to claim 1,
wherein the bonding layer contains an elastomer component in an amount of 5 wt% or more and 75 wt% or less.

3. The bonded body according to claim 2,
wherein the elastomer has a tensile elastic modulus of 50 MPa or higher and 1000 MPa or lower in the absolute dry state as the water absorption state at 23°C.

4. A bonding method of bonding a first member (2, 12, 22) to a second member (3, 13, 23) which is formed of a material different from that of the first member, the method comprising:
an injection molding process of integrally laminating a bonding layer (4, 14, 24) for bonding the first member and the second member to each other, on a bonding surface (2a, 12a, 22a) of the first member, which is to be bonded to the second member, through injection molding; and
a bonding process of bonding the second member to the bonding layer after the injection molding process
**characterised in that** the bonding layer has a tensile elastic modulus of 1200 MPa or higher and 2000 MPa or lower in an absolute dry state as a water absorption state at 23 °C.

5. The bonding method according to claim 4,
wherein, in the bonding process, the second member is bonded to the bonding layer through welding.

6. The bonding method according to claim 4 or 5,
wherein the injection molding process further includes a surface treatment process of forming pores on the bonding surface of the first member.

7. The bonding method according to any one of claims 4 to 6,
wherein the first member is formed of any one of metal and glass, and the second member is formed of a resin.

## Patentansprüche

1. Verbundener Körper (1, 11, 21), wobei
ein erstes Glied (2, 12, 22) und ein zweites Glied (3, 13, 23) aus einem anderen Material als das erste Glied über eine dazwischen angeordnete Verbindungsschicht (4, 14, 24) miteinander verbunden sind und
in einem Bereich von 13 µm in einem Querschnitt einer Verbindungsgrenzfläche zwischen dem ersten Glied und der Verbindungsschicht die Zahl von Luftblasen mit einer Hohlraumfläche von 1,5 × 10⁻³ µm² oder mehr 100 oder weniger beträgt, **dadurch gekennzeichnet, dass** die Verbindungsschicht in einem absolut trockenen Zustand als Wasserabsorptionszustand bei 23 °C einen Zugelastizitätsmodul von 1200 MPa oder mehr und 2000 MPa oder weniger aufweist.

2. Verbundener Körper nach Anspruch 1,
wobei die Verbindungsschicht eine Elastomerkomponente in einer Menge von 5 Gew.-% oder mehr und 75 Gew.-% oder weniger enthält.

3. Verbundener Körper nach Anspruch 2,
wobei das Elastomer im absolut trockenen Zustand als Wasserabsorptionszustand bei 23 °C einen Zugelastizitätsmodul von 50 MPa oder mehr und 1000 MPa oder weniger aufweist.

4. Verbindungsverfahren zum Verbinden eines ersten Glieds (2, 12, 22) mit einem zweiten Glied (3, 13, 23) aus einem anderen Material als das erste Glied, wobei das Verfahren Folgendes umfasst:
einen Spritzgussprozess des integralen Laminierens einer Verbindungsschicht (4, 14, 24) zum Verbinden des ersten Glieds und des zweiten Glieds miteinander auf einer Verbindungsoberfläche (2a, 12a, 22a) des ersten Glieds, das mit dem zweiten Glied zu verbinden ist, durch Spritzguss; und
einen Verbindungsprozess des Verbindens des zweiten Glieds mit der Verbindungsschicht nach dem Spritzgussprozess;
**dadurch gekennzeichnet, dass** die Verbindungsschicht in einem absolut trockenen Zustand als Wasserabsorptionszustand bei 23 °C einen Zugelastizitätsmodul von 1200 MPa oder mehr und 2000 MPa oder weniger aufweist.

5. Verbindungsverfahren nach Anspruch 4,
wobei bei dem Verbindungsprozess das zweite Glied durch Schweißen mit der Verbindungsschicht verbunden wird.

6. Verbindungsverfahren nach Anspruch 4 oder 5,
wobei der Spritzgussprozess ferner einen Oberflächenbehandlungsprozess des Bildens von Poren auf der Verbindungsoberfläche des ersten Glieds umfasst.

7. Verbindungsverfahren nach einem der Ansprüche 4 bis 6,
wobei das erste Glied aus Metall oder Glas ausgebildet ist und das zweite Glied aus einem Harz ausgebildet ist.

## Revendications

1. Corps lié (1, 11, 21), dans lequel
un premier élément (2, 12, 22) et un deuxième élément (3, 13, 23) constitué d'un matériau différent de celui du premier élément sont liés l'un à l'autre par une couche de liaison (4, 14, 24) intercalée entre eux, et
dans une plage de 13 µm dans une section transversale d'une interface de liaison entre le premier élément et la couche de liaison, le nombre de bulles d'air ayant une surface de vide de 1,5×10⁻³ µm² ou plus est de 100 ou moins,
**caractérisé en ce que** la couche de liaison a un module d'élasticité en traction de 1200 MPa ou plus et 2000 MPa ou moins dans un état sec absolu en tant qu'état d'absorption d'eau à 23 °C.

2. Corps lié selon la revendication 1,
dans lequel la couche de liaison contient un constituant élastomère dans une quantité de 5 % en poids ou plus et 75 % en poids ou moins.

3. Corps lié selon la revendication 2,
dans lequel l'élastomère a un module d'élasticité en traction de 50 MPa ou plus et 1000 MPa ou moins dans l'état sec absolu en tant qu'état d'absorption d'eau à 23 °C.

4. Procédé de liaison consistant à lier un premier élément (2, 12, 22) à un deuxième élément (3, 13, 23) qui est constitué d'un matériau différent de celui du premier élément, le procédé comprenant :
une opération de moulage par injection consistant à laminer intégralement une couche de liaison (4, 14, 24), destinée à lier le premier élément et le deuxième élément l'un à l'autre, sur une surface de liaison (2a, 12a, 22a) du premier élément, qui doit être lié au deuxième élément, par moulage par injection ; et
une opération de liaison consistant à lier le deuxième élément à la couche de liaison après l'opération de moulage par injection,
**caractérisé en ce que** la couche de liaison a un module d'élasticité en traction de 1200 MPa ou plus et 2000 MPa ou moins dans un état sec absolu en tant qu'état d'absorption d'eau à 23 °C.

5. Procédé de liaison selon la revendication 4,
dans lequel, dans l'opération de liaison, le deuxième élément est lié à la couche de liaison par soudage.

6. Procédé de liaison selon la revendication 4 ou 5,
dans lequel l'opération de moulage par injection comporte en outre une opération de traitement de surface consistant à former des pores sur la surface de liaison du premier élément.

7. Procédé de liaison selon l'une quelconque des revendications 4 à 6,
dans lequel le premier élément est indifféremment constitué de métal ou de verre, et le deuxième élément est constitué d'une résine.
